# EUROPÄISCHE PATENTSCHRIFT

(11) **EP 1 363 817 B1**
(45) Veröffentlichungstag und Bekanntmachung des Hinweises auf die Patenterteilung: **29.11.2006**
(21) Anmeldenummer: 02716585.1
(22) Anmeldetag: 01.02.2002
(51) Int. Cl.: B60S 1/40

(54) **WISCHVORRICHTUNG INSBESONDERE FÜR SCHEIBEN VON KRAFTFAHRZEUGEN**
WIPER DEVICE ESPECIALLY FOR THE PANES OF MOTOR VEHICLES
SYSTEME D'ESSUIE-GLACE, DESTINE EN PARTICULIER A DES VEHICULES AUTOMOBILES

(30) Priorität: 21.02.2001 DE 10108200
(43) Veröffentlichungstag der Anmeldung: 26.11.2003
(73) Patentinhaber: ROBERT BOSCH GMBH, 70442 Stuttgart (DE)
(72) Erfinder: DE BLOCK, Peter, B-3545 Halen (BE); BREESCH, Frans, B-3840 Borgloon (BE); WIJNANTS, Peter, B-3111 Wezemaal (BE)
(86) Internationale Anmeldenummer: PCT/DE2002/000375
(87) Internationale Veröffentlichungsnummer: WO 2002/066300

(56) Entgegenhaltungen:
- WO-A-00/73113
- GB-A- 2 263 392
- US-A- 4 446 589

## Beschreibung

### Stand der Technik

Die Erfindung geht aus von einer Wischvorrichtung nach der Gattung des Anspruchs 1. Bei einer bekannten Wischvorrichtung dieser Art (DE 16 55 410 A1) sind in einer auf die zu wischende Scheibe gerichteten Ansicht der Wischerarm und das Wischerblatt nebeneinander bzw. bezogen auf die Arbeitsrichtung der Wischvorrichtung hintereinander angeordnet. Dadurch wird eine geringere Bauhöhe für die Wischvorrichtung erreicht, als dies bei Wischvorrichtungen möglich ist, bei denen sich der Wischerarm über dem Wischblatt befindet (DE 15 05 397 A1). Die geringere Bauhöhe der gattungsgemäßen Wischvorrichtung bringt Vorteile hinsichtlich des Abhebeverhaltens des Wischblatts von der Scheibe, insbesondere bei hohen Fahrgeschwindigkeiten. Damit das Wischblatt während des Wischbetriebs auf dem Gelenkbolzen gesichert ist, ist bei einer solchen Wischvorrichtung der seitlich am Wischerarm angeordnete Gelenkbolzen in seinem Mittelabschnitt mit einer Ringnut versehen, in welche eine gegen Federkraft auslenkbare, am Wischblatt einendig befestigte Blattfeder nach dem Aufbringen des Wischblatts auf dem Gelenkbolzen eintaucht und zusammen mit den Seitenwänden der Ringnut die Sicherung des Wischblatts am Wischerarm gewährleistet. Dabei bilden die beiden seitlichen Ringflächen der Ringnut die Sicherungsflächen des Wischerarms, während die Seitenkanten der Blattfeder als Anschlagflächen des Wischblatts wirken. Die Anordnung und Ausbildung derartiger Sicherungsmittel ist kostenintensiv, weil einerseits der Gelenkbolzen mit der Ringnut versehen werden muß und andererseits beim Wischblatt-Austausch das neue Wischblatt wieder mit einer entsprechenden Blattfeder ausgerüstet sein muß.

Bei einer anderen bekannten Wischvorrichtung (DE 26 40 399 A1) sind der Gelenkbolzen und dessen Sicherungsmittel am Wischblatt angeordnet, die bei dessen Austausch verloren gehen und deshalb an jedem Wischblatt vorhanden sein müssen. Jedoch kann der Gelenkbolzen auch am Wischerarm vorgesehen sein.

Eine Wischvorrichtung mit den Merkmalen des Oberbegriffs ist weiterhin aus der WO-A-00/73 113 bekannt.

### Vorteile der Erfindung

Beim erfindungsgemäßen Wischblatt mit dem kennzeichnenden Merkmal des Anspruchs 1 ist das auf dem Gelenkbolzen gelagerte Wischblatt mit den seitlichen Anschlagflächen des Kupplungsteils zwischen dem Wangenbereich des Wischerarms und dem am freien Ende des Gelenkbolzens befindlichen Ansatz angeordnet und damit in Richtung der Gelenkachse gesichert. Besonders wischblattseitige Rastmittel, die beim Wischblatt-Austausch verloren gehen, sind nicht erforderlich, weil deren Funktion von den unabhängig von einem separaten Kupplungsteil stets vorhandenen Längsseiten des Wischblattes übernommen wird.

In Fortbildung der Erfindung ist der Ansatz fest mit dem Gelenkbolzen verbunden und die Lagerbohrung ist an ihrer Mantelfläche mit einem auf den Ansatz abgestimmten Durchsteckkanal versehen. Dadurch ergibt sich die Möglichkeit, den Gelenkbolzen aus einem festen, unelastischen Material, beispielsweise aus Metall, zu fertigen.

Eine besonders betriebssichere Ausbildung der Erfindung ist möglich, wenn an dem Gelenkbolzen mehrere Ansätze angeordnet sind, wobei die Lagerbohrung an ihrer Mantelfläche entsprechend der Anzahl der Ansätze mehrere, auf diese abgestimmte Durchsteckkanäle hat.

Wenn die Anschlagfläche des Wischblatts an der Grundfläche einer sich von der Bohrungsmündung aus in Umfangsrichtung und radial erstreckenden Einsenkung ausgebildet ist, welche sich von der vom Wischerarm abgewandten Längsseite des Kupplungsteils aus in Richtung der Gelenkachse erstreckt, taucht der Ansatz in die Einsenkung ein. Der optisch möglicherweise störende Ansatz ist somit nicht mehr sichtbar.

Wenn weiter in Richtung der Gelenkachse gesehen die Einsenkung ringsegmentförmig ausgebildet ist und der Durchsteckkanal in die Einsenkung mündet, kann zumindest die eine Segmentendfläche als Anschlag oder Begrenzungsfläche für die Schwingbewegung des Wischblatts in der einen Schwingrichtung benutzt werden.

Zweckmäßig mündet der Durchsteckkanal nahe der einen Ringsegmentendfläche in die Einsenkung, sodass sich daraus eine definierte Montagestellung für das Wischblatt auf dem Wischerarm ergibt.

In Fortbildung der Erfindung bildet die andere Ringsegmentendfläche eine Schwingbegrenzung für das auf dem Gelenkbolzen gelagerte Wischblatt. Dadurch wird erreicht, dass sich das Wischblatt an dem von der Scheibe abgehobenen Wischerarm nicht um etwa 180 °drehen kann, so dass das Wischblatt nicht mit seinem Rücken auf die Scheibe abzulegen ist.

Um eine ordnungsgemäße, den Erfordernissen entsprechende Schwingbewegung des Wischblatts auf dem Gelenkbolzen sicherzustellen, ist der Segmentwinkel größer als die während des Wischbetriebs erfolgende Schwingbewegung des Wischblatts um die Gelenkachse des Gelenkbolzens, zuzüglich der Dicke des Ansatzes.

Damit der gegebenenfalls mit einem Abschnitt aus der Einsenkung herausragende Ansatz des Gelenkbolzens beim Umgang mit dem Wischblatt beispielsweise beim Reinigen der Windschutzscheibe von Hand, keine Gefahr für eine Verletzung der damit befaßten Person darstellt, ist die Tiefe der Einsenkung zumindest so groß wie die Höhe des Ansatzes in Richtung der Gelenkachse gemessen.

Eine besonders kostengünstige Ausführung des Erfindungsgedankes wird dadurch erreicht, dass der Ansatz nach Art einer rechteckigen Platte ausgebildet ist, deren eine Längsseite dem Gelenkbolzen zugewandt vorzugsweise einstückig und die Gelenkachse querend mit dem Gelenkbolzen verbunden ist und deren Länge größer ist als der Durchmesser des Gelenkbolzens. An den beiden über den Durchmesser des Gelenkbolzens hinausragenden Überständen des Ansatzes kann dann auf einfache Weise die eine Sicherungsfläche des Wischerarms ausgebildet sein.

Wenn weiter das Kupplungsteil der Wischvorrichtung an der von der Scheibe abgewandten oberen Bandfläche eines bandartig langgestreckten, federelastischen Tragelements gehalten ist, wobei es wenigstens über einen Teilabschnitt flächig an dieser anliegt und weiter an der der Scheibe zugewandten unteren Bandfläche des Tragelements eine an der Scheibe anlegbare, gummielastische Wischleiste längsachsenparallel angeordnet ist, ergibt sich ein besonders niedrig und leicht bauendes, zum Wischhebel gehörendes Wischblatt.

Die Erfindung betrifft auch ein Wischblatt und einen Wischerarm nach Anspruch 12 bzw. 13.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

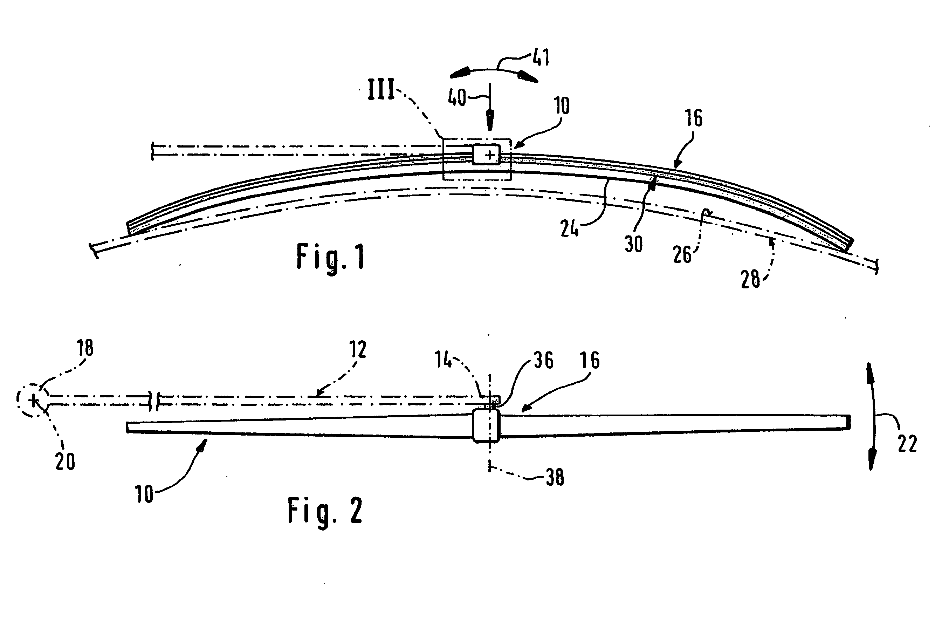

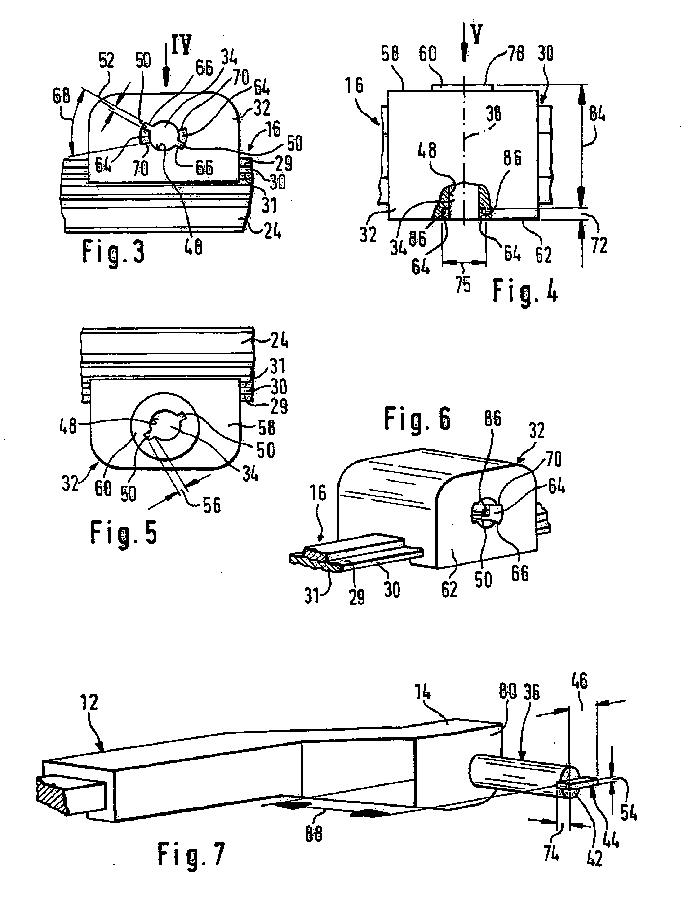

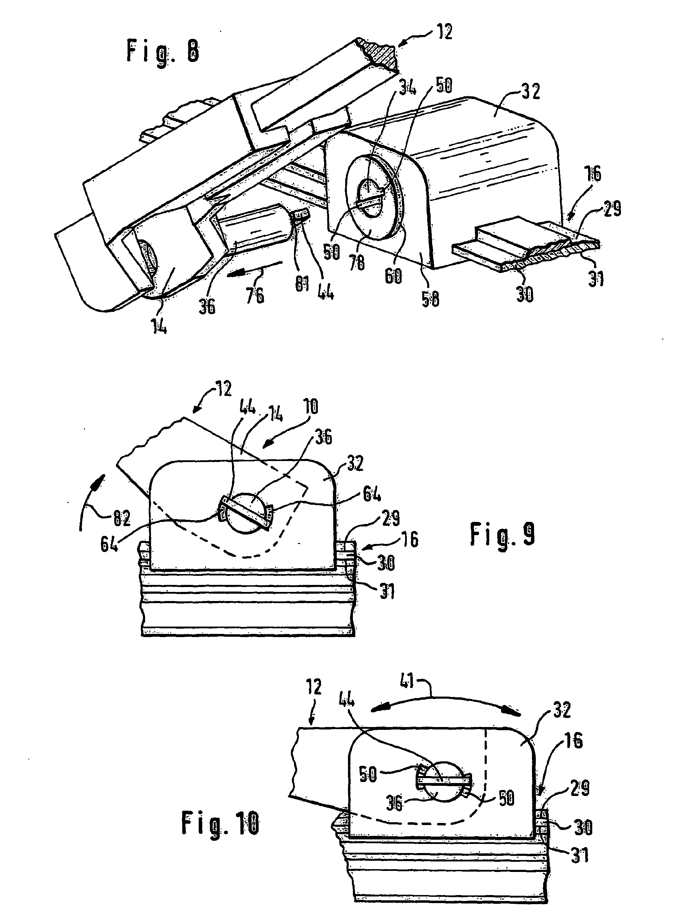

In der Zeichnung zeigen: Figur 1 eine schematisch dargestellte Wischvorrichtung in Seitenansicht, Figur 2 die Wischvorrichtung gemäß Figur 1 in Draufsicht, Figur 3 eine in Figur 1 mit III bezeichnete Einzelheit eines zur Wischvorrichtung gehörenden Wischblatts in vergrößerter Darstellung, Figur 4 eine Draufsicht auf die Anordnung gemäß Figur 3 in Richtung des Pfeiles IV, Figur 5 eine Seitenansicht der Anordnung gemäß Figur 4 in Richtung des Pfeiles V, Figur 6 eine perspektivische Darstellung der Anordnung gemäß Figur 3, Figur 7 eine perspektivische Darstellung des mit einem Gelenkbolzen versehenen Endabschnitts eines zur Wischvorrichtung gehörenden Wischerarms, Figur 8 die Anordnung gemäß den Figuren 6 und 7 in einer zueinander ausgerichteten Vormontageposition, von der Rückseite her gesehen, in perspektivischer Darstellung, Figur 9 die Anordnung gemäß Figur 8 in einer Zwischen-Montageposition in Seitenansicht dargestellt und Figur 10 die Anordnung gemäß Figur 9 in Betriebsposition.

### Beschreibung des Ausführungsbeispiels

Zu einer erfindungsgemäßen Wischvorrichtung gehört ein Wischhebel 10 (Figuren 1 und 2) der einen einendig am nicht dargestellten Kraftfahrzeug geführten, angetriebenen Wischerarm 12 hat, an dessen freiem Ende 14 ein langgestrecktes Wischblatt 16 angelenkt ist. Der Wischerarm 12 ist mit seinem anderen Ende 18 gelagert und um eine Pendelachse 20 in Richtung des Doppelpfeils 22 zwischen Umkehrlagen pendelbar. Dabei wird das Wischblatt 16 quer zu seiner Längserstreckung über die zu wischende Scheibe bewegt, wobei es mit einer gummielastischen Wischleiste 24 an der Oberfläche 26 der zu wischenden Scheibe 28 anliegt.

Die Wischleiste 24 ist mit einem bandartig langgestreckten, federelastischen Tragelement 30 längsachsenparallel verbunden, an dessen von der Scheibe abgewandten oberen Bandfläche 29 ein Kupplungsteil 32 sitzt (Figur 8), über welches das Wischblatt 16 mit dem Wischerarm 20 gelenkig verbunden ist. Dazu ist das flächig an der Bandfläche 29 anliegende Kupplungsteil 32 mit einer Lagerbohrung 34 versehen (Figuren 3 bis 5), welche zur Aufnahme eines Gelenkbolzens 36 dient, der seitlich am freien Ende 14 des Wischerarms 12 fest mit diesem verbunden ist (Figur 7). Der Gelenkbolzen 36, bzw. die Gelenkachse 38 (Figur 2), erstreckt sich somit im wesentlichen in Richtung der Pendel- oder Arbeitsbewegung (Doppelpfeil 22) des Wischhebels 10. Wie aus Figur 1 ersichtlich ist, ist die zu wischende Oberfläche 26 der strichpunktiert dargestellten Scheibe 28 gekrümmt. Da die Linie 26 die stärkste Krümmung der Scheibenoberfläche darstellen soll, ist klar ersichtlich, dass die Krümmung des mit seinen beiden Enden an der Scheibe anliegenden, noch unbelasteten Wischblatts 16 stärker ist als die maximale Scheibenkrümmung. Unter einem über den Wischerarm 12 ausgeübten, in Richtung des Pfeiles 40 (Figur 1) wirkenden Anpressdrucks legt sich das Wischblatt mit seiner an der unteren Bandfläche 31 des Tragelements 30 angeordneten, gummielastischen Wischleiste 24 über seine gesamte Länge an der Scheibenoberfläche 26 an. Dabei baut sich im aus Metall gefertigten, federelastischen Tragelement 30 eine Spannung auf, welche für eine ordnungsgemäße Anlage der Wischleiste 24 über deren gesamte Länge an der Scheibe 28 sowie für eine gleichmäßige Verteilung des Anpressdrucks 40 sorgt. Weil die in aller Regel sphärisch gekrümmte Scheibe nicht einen Abschnitt einer Kugeloberfläche darstellt, muss sich das Wischblatt 16 gegenüber dem Wischerarm 12 während seiner Wischbewegung ständig der jeweiligen Lage und dem Verlauf der Scheibenoberfläche anpassen können. Deshalb ist die eine Schwingbewegung (Doppelpfeil 41) ermöglichende Gelenkverbindung 34, 36 zwischen dem Wischerarm und dem Wischblatt notwendig.

Diese Gelenkverbindung soll im folgenden anhand der Figuren 3 bis 8 erläutert werden. Dabei ist in den Figuren 6 und 8 lediglich der obere, die Verbindung zwischen dem Kupplungsteil 32 der Wischleiste 24 und dem Tragelement 30 darstellende Bereich des Wischblatts 16 gezeichnet worden. Zur Vereinfachung der Beschreibung wurde dabei nicht mehr zwischen Wischleiste 24 und Tragelement 30 unterschieden, weil die Verbindung zwischen diesen beiden Teilen für die Ausgestaltung der Gelenkverbindung zwischen dem Wischblatt 16 und dem Wischerarm 12 unerheblich ist.

Der wischerarmseitige Teil der Schwing-Gelenkverbindung wird durch den Gelenkbolzen 36 und dessen besondere Ausgestaltung gebildet. Wie aus Figur 7 ersichtlich ist, ist an der End-Stirnfläche 42 des Gelenkbolzens 36 ein plattenartiger Ansatz 44 angeordnet, wobei die eine Längsseite 81 dieses Ansatzes dem Gelenkbolzen 36 zugewandt und mit diesem einstückig verbunden ist. Die Anordnung des Ansatzes 44 ist dabei so getroffen, dass er die Längsachse des Gelenkbolzens 36, welche gleichzeitig die Gelenkachse 38 der Gelenkverbindung bildet, quert. Die Länge 46 des Ansatzes 44 ist größer als der Durchmesser des Gelenkbolzens 36, so dass seine beiden Enden flügelartig und maßgleich über den Gelenkbolzen hinausragen. Damit der Gelenkbolzen 36 zur Bildung des Wischhebels 10 in die Lagerbohrung 34 des Kupplungsteils 32 eingebracht werden kann, ist die Lagerbohrung an ihrer Mantelfläche 48 (Figur 4) mit zwei einander diametral gegenüberliegenden Durchsteckkanälen 50 versehen, deren Breite 52 (Figur 3) auf die Dicke 54 des plattenartigen Ansatzes 44 (Figur 7) so abgestimmt ist, dass die über den Durchmesser des Gelenkbolzens 36 hinausragenden Flüqelenden problemlos durch die Durchsteckkanäle 50 hindurch geführt werden können. Dazu ist es natürlich auch erforderlich, dass die Tiefe 56 (Figur 5) der Durchsteckkanäle 50 (Figur 5) so bemessen ist, dass das Maß des Bohrungsdurchmessers plus zweimal die Tiefe 56 in Summe zumindest so groß ist wie die Länge 46 des plattenartigen Ansatzes 44.

An seiner einen, sich in Längsrichtung des Wischblatts 16 erstreckenden Seitenwange 58 hat das Kupplungsteil 32 einen ringartigen Vorsprung 60, welcher die Lagerbohrung 34 umgibt. Dieser Vorsprung kann beispielsweise durch einen ringbundartigen Ansatz einer vorgefertigten Lagerbuchse gebildet sein, welche im Kupplungsteil 32 sitzt. An seiner anderen Längsseite oder Seitenwange 62 hat das Kupplungsteil 32 zwei diametral einander gegenüber liegende Einsenkungen 64, welche in Richtung der Gelenkachse 38 gesehen ringsegmentförmig ausgebildet sind (Figur 3 und 6). In jede der beiden Einsenkungen 64 - die sich zur Bohrung 34 radial und über einen Segmentwinkel in Umfangsrichtung erstrecken - mündet einer der beiden Durchsteckkanäle 50. Dabei sind die beiden Einsenkungen so angeordnet, dass die Durchsteckkanäle 50 jeweils nahe der einen Ringsegmentendfläche 66 in die jeweilige Einsenkung 64 mündet. Die anderen, von den Flächen 66 um den Segmentwinkel 68 abliegenden Ringsegmentendflächen 70 begrenzen die Einsenkungen 64 in Umfangsrichtung. Die Tiefe der Einsenkungen 64 ist zumindest so groß, wie die Höhe 74 des plattenartigen Ansatzes 44 in Richtung der Gelenkachse 38 gemessen. Das Maß 75 zwischen den äußeren Segmentflächen ist etwas größer als die Länge 46 des Ansatzes 44.

Die Verbindung zwischen dem Wischerarm 12 und dem Wischblatt 16 zur Bildung des Wischhebel 10 soll im folgenden anhand der Figuren 8 bis 10 erläutert werden. Zunächst müssen die beiden Wischhebelteile 12 und 16 koaxial zueinander in eine Position gebracht werden, in welcher der Ansatz 44 bzw. dessen beide flügelartigen Vorsprünge mit dem jeweiligen Verlauf des ihm zugeordneten Durchsteckkanals 50 fluchtet (Figur 8). Danach wird das Wischblatt in Richtung des Pfeiles 76 auf den Gelenkbolzen 36 aufgeschoben, wobei die flügelartigen Enden des Ansatzes 44 in ihre Durchsteckkanäle 50 gelangen. Wenn das Wischblatt 16 bzw. dessen Kupplungsteil 32 mit der Stirnfläche 78 des Vorsprungs 60 an einem ihr zugewandten flächigen Wangenbereich 80 (Figur 7) des Wischerarms 12 anschlägt, ist auch der plattenartige Ansatz 44 des Gelenkbolzens 36 aus der Lagerbohrung 34 herausgetreten und befindet sich mit seinen flügelartigen Enden jeweils im Bereich der beiden ringsegmentförmigen Einsenkungen 64 (Figur 9). Durch Schwenken des Wischblatts 16 in Richtung des Pfeiles 82 (Figur 9) gelangt das Wischblatt bzw. der Wischhebel 10 in seine Betriebsposition, in welcher die flügelartigen Vorsprünge ihre Durchsteckkanäle 50 verlassen und eine in Figur 10 dargestellte Betriebsposition einnehmen, wenn das Wischblatt an der zu wischenden Scheibe 28 angelegt ist. Damit während des Wischbetriebs keine unerwünschten Geräusche auftreten und eine ordnungsgemäße Führung des Wischblatts am Wischerarm gewährleistet ist, ist das Maß 84 (Figur 4) von der Stirnfläche 78 zu den Grundflächen 86 der Einsenkungen 64 sorgfältig auf das Maß 88 (Figur 7) von der Fläche 80 des Wischerarms 12 und den dieser Fläche zugewandten Längs-Stirnflächen 81 der flügelartigen Enden abgestimmt. Es versteht sich von selbst, dass zur Vermeidung von Überbestimmungen der Segmentwinkel 68 in Schwingrichtung (Doppelpfeil 41) zumindest um die Dicke 54 des Ansatzes 44 größer ist als die während des Wischbetriebs erfolgende Schwingbewegung des Wischblatts 16 um die Gelenkachse 38. Weiter ist klar, dass die beiden Einsenkungen 64 in Bezug auf die beiden Durchsteckkanäle 50 so angeordnet sein müssen, dass eine Relativbewegung zwischen Wischerarm 12 und Wischblatt 16 während des Wischbetriebs möglich ist. Die vom Durchsteckkanal 50 abliegende Ringsegmentendfläche 70 ist so angeordnet, dass sie eine Schwenkbegrenzung für das auf dem Gelenkbolzen 36 gelagerte Wischblatt 16 bildet. Dadurch wird verhindert, dass sich das Wischblatt bei von der Scheibe weggeklapptem Wischerarm sich um die Gelenkachse um ca. 180° in eine Fehlmontagestellung drehen kann, in welcher dann das Kupplungsteil 32 - statt der Wischleiste 24 - der Scheibe 28 zugewandt ist.

Der plattenartige Ansatz 44 des Gelenkbolzens 36 bildet somit ein Sicherungsmittel für das Wischblatt, damit dieses sich nicht unbeabsichtigt - beispielsweise während des Wischbetriebs - vom Wischerarm lösen kann. Diese Sicherungsmittel umfassen quer zur Gelenkachse 38 mit Abstand 84 voneinander liegende Anschlagflächen 78, 86 des Wischblatts 16, die passend zwischen gegeneinander gerichtete Sicherungsflächen 80 und 81 des Wischerarms 12 greifen. Dabei sind die Anschlagflächen des Wischblatts an den beiden Längsseiten eines an diesem vorhandenen, eine Lagerbohrung 34 für den Gelenkbolzen 36 aufweisenden Kupplungsteils 32 angeordnet. Die eine Sicherungsfläche des Wischerarms 12 ist ein dem Wischblatt zugewandter Wangenbereich 80. Die andere Sicherungsfläche des Wischerarms 12 ist an dem aus der Lagerbohrung 34 ragenden Ansatz 44 des Gelenkbolzens 36 durch die dem Wangenbereich 80 zugewandten Längs-Stirnflächen 81 (Figur 8) des Ansatzes 44 gebildet, welche die vom Wischerarm abgewandte Grund- oder Anschlagfläche 86 des Wischblatts hintergreift. Diese Anschlagflächen 86 des Wischblatts sind durch die Grundflächen 86 der Einsenkungen 64 gebildet, die mit den ihnen zugewandten Flächen 81 der flügelartigen Enden des Ansatzes 44 zusammenwirken. Durch eine entsprechende Abstimmung der Tiefe 72 der Einsenkungen auf die Höhe 74 des plattenartigen Ansatzes 44 ist gewährleistet, dass der plattenartige Ansatz vollständig in den Einsenkungen 64 liegt und nicht aus diesen herausragt. Um das Wischblatt 16 vom Wischerarm 12 abzunehmen, wird dieses aus seiner Betriebsposition (Figur 10) entgegen dem Pfeil 82 in Figur 9 geschwenkt, bis der Ansatz 44 mit den Durchsteckkanälen 50 fluchtet. Danach kann es entgegen der Richtung des Pfeiles 76 in Figur 8 vom Wischerarm 12 abgezogen werden.

## Patentansprüche

1. Wischvorrichtung, insbesondere für Scheiben von Kraftfahrzeugen mit einem am Kraftfahrzeug geführten, angetriebenen, zwischen Umkehrlagen bewegbaren Wischerarm (12), an dem, insbesondere an dessen freiem Ende (14), ein an diesem gehaltener Gelenkbolzen (36) angeordnet ist, dessen Gelenkachse (38) sich quer zur Wischerarm-Längsachse im Wesentlichen in Bewegungsrichtung (Doppelpfeil 22) des Wischerarms (12) erstreckt, auf dem Gelenkbolzen ein um die Gelenkachse (38) schwenkbares, an der Scheibe (28) anlegbares Wischblatt (16) gelagert ist und die Wischvorrichtung Mittel zum Sichern des Wischblatts auf dem Gelenkbolzen aufweist, welche quer zur Gelenkachse mit Abstand von einander liegende, von einander wegweisende, am Wischblatt angeordnete Anschlagflächen haben, die passend zwischen gegeneinander gerichtete Sicherungsflächen des Wischerarms greifen, wobei die Anschlagflächen (78, 86) des Wischblatts an den beiden Längsseiten eines an diesem vorhandenen, eine Lagerbohrung (34) für den Gelenkbolzen (36) aufweisenden Kupplungsteils (32) angeordnet sind, wobei die eine Sicherungsfläche des Wischerarms ein dem Wischblatt zugewandter Wangenbereich (80) ist, **dadurch gekennzeichnet, dass** die andere Sicherungsfläche (81) an einem Ansatz (44) des Gelenkbolzens (36) ausgebildet ist, welcher die vom Wischerarm abgewandte Anschlagfläche (86) des Wischblatts (16) hintergreift.

2. Wischvorrichtung nach Anspruch 1, **dadurch gekennzeichnet, dass** der Ansatz (44) fest mit dem Gelenkbolzen (36) verbunden ist und dass die Lagerbohrung (34) an ihrer Mantelfläche (48) mit einem auf den Ansatz abgestimmten Durchsteckkanal (50) versehen ist.

3. Wischvorrichtung nach einem der Ansprüche 1 oder 2, **dadurch gekennzeichnet, dass** an dem Gelenkbolzen (36) mehrere Ansätze angeordnet sind und dass die Lagerbohrung (34) an ihrer Mantelfläche (48) entsprechend der Anzahl der Ansätze mehrere auf die Ansätze abgestimmte Durchsteckkanäle (50) hat.

4. Wischvorrichtung nach einem der Ansprüche 1 bis 3, **dadurch gekennzeichnet, dass** die Anschlagfläche des Wischblatts an der Grundfläche (86) einer sich von der Bohrungsmündung aus in Umfangsrichtung und radial erstreckende Einsenkung (64) ausgebildet ist, welche sich von der vom Wischerarm (12) abgewandten Längsseite (62) des Kupplungsteils (30) aus in Richtung der Gelenkachse erstreckt.

5. Wischvorrichtung nach Anspruch 4, **dadurch gekennzeichnet, dass** in Richtung der Gelenkachse (38) gesehen die Einsenkung (64) ringsegmentförmig ausgebildet ist und dass der Durchsteckkanal (50) in die Einsenkung mündet.

6. Wischvorrichtung nach Anspruch 5, **dadurch gekennzeichnet, dass** der Durchsteckkanal (50) nahe der einen Ringsegmentendfläche (66) in die Einsenkung (64) mündet.

7. Wischvorrichtung nach Anspruch 6, **dadurch gekennzeichnet, dass** die andere Ringsegmentendfläche (70) eine Schwenkbegrenzung für das auf dem Gelenkbolzen (36) gelagerte Wischblatt (16) bildet.

8. Wischvorrichtung nach einem der Ansprüche 6 oder 7, **dadurch gekennzeichnet, dass** der Segmentwinkel (68) größer ist als die während des Wischbetriebs erfolgende Schwingbewegung des Wischblatts (16) um die Gelenkachse (38) des Gelenkbolzens (36).

9. Wischvorrichtung nach einem der Ansprüche 3 bis 8, **dadurch gekennzeichnet, dass** die Tiefe (72) der Einsenkung (64) zumindest so groß ist wie die Höhe (74) des Ansatzes (44) in Richtung der Gelenkachse (38) gemessen.

10. Wischvorrichtung nach einem der Ansprüche 3 bis 9, **dadurch gekennzeichnet, dass** der Ansatz (44) nach Art einer rechteckigen Platte ausgebildet ist, deren eine Längsseite (81) dem Gelenkbolzen (36) zugewandt und die Gelenkachse querend vorzugsweise einstückig mit dem Gelenkbolzen verbunden ist und deren Länge (46) größer ist als der Durchmesser des Gelenkbolzens (36).

11. Wischvorrichtung nach einem der Ansprüche 1 bis 10, **dadurch gekennzeichnet, dass** das Kupplungsteil (32) an der von der Scheibe (28) abgewandten oberen Bandfläche (29) eines bandartig lang gestreckten, federelastischen Tragelements (30) gehalten ist, wobei es wenigstens über einen Teilabschnitt flächig an dieser anliegt und dass an der der Scheibe (28) zugewandten unteren Bandfläche (31) des Tragelements (30) eine an der Scheibe anlegbare, gummielastische Wischleiste (24) längsachsenparallel angeordnet ist.

12. Wischblatt, insbesondere für Scheiben von Kraftfahrzeugen mit einem am Kraftfahrzeug geführten, angetriebenen, zwischen Umkehrlagen bewegbaren Wischerarm (12), an dem ein an diesem gehaltener Gelenkbolzen (36) angeordnet ist, dessen Gelenkachse (38) sich quer zur Wischerarm-Längsachse im Wesentlichen in Bewegungsrichtung (22) des Wischerarms (12) erstreckt, mit Mittel zum Sichern des Wischblatts auf dem Gelenkbolzen, wobei quer zur Gelenkachse mit Abstand von einander liegende, von einander wegweisende, am Wischblatt Anschlagflächen (78, 86) angeordnet sind, die passend zwischen gegeneinander gerichtete Sicherungsflächen (80, 81) des Wischerarms greifen, wobei die Anschlagflächen (78, 86) des Wischblatts an den beiden Längsseiten eines an diesem vorhandenen, eine Lagerbohrung (34) für den Gelenkbolzen (36) aufweisenden Kupplungsteils (32) angeordnet sind, wobei die eine Sicherungsfläche des Wischerarms ein dem Wischblatt zugewandter Wangenbereich (80) ist, **dadurch gekennzeichnet, dass** die andere Sicherungsfläche (81) an einem Ansatz (44) des Gelenkbolzens (36) ausgebildet ist, welcher die vom Wischerarm abgewandte Anschlagfläche (86) des Wischblatts (16) hintergreift, insbesondere zur Verwendung in einer Wischvorrichtung nach einem der Ansprüche 1 bis 11.

13. Wischerarm, insbesondere für Scheiben von Kraftfahrzeugen, an dem, insbesondere an dessen freiem Ende (14), ein an diesem gehaltener Gelenkbolzen (36) angeordnet ist, dessen Gelenkachse (38) sich quer zur Wischerarm-Längsachse im Wesentlichen in Bewegungsrichtung (Doppelpfeil 22) des Wischerarms (12) erstreckt, so dass auf dem Gelenkbolzen ein um die Gelenkachse (38) schwenkbares, an der Scheibe (28) anlegbares Wischblatt (16) lagerbar ist und der Gelenkbolzen Mittel zum Sichern des Wischblatts auf dem Gelenkbolzen aufweist, wobei quer zur Gelenkachse mit Abstand von einander liegende, von einander wegweisende, am Wischblatt angeordnete Anschlagflächen (78, 86) passend zwischen gegeneinander gerichtete Sicherungsflächen (80, 81) des Wischerarms aufgenommen werden können, wobei die eine Sicherungsfläche des Wischerarms ein dem Wischblatt zugewandter Wangenbereich (80) ist, **dadurch gekennzeichnet, dass** die andere Sicherungsfläche (81) an einem Ansatz (44) des Gelenkbolzens (36) ausgebildet ist, welcher die vom Wischerarm abgewandte Anschlagfläche (86) des Wischblatts (16) hintergreift, insbesondere zur Verwendung in einer Wischvorrichtung nach einem der Ansprüche 1 bis 11.

## Claims

1. Wiper device, especially for panes of motor vehicles, with a driven wiper arm (12) which is guided on the motor vehicle, can be moved between reversal positions and on which, in particular at the free end (14) of which, a hinge bolt (36) is arranged, which hinge bolt is held on the said wiper arm and its hinge axis (38) extends transversely to the longitudinal axis of the wiper arm essentially in the direction of movement (double arrow 22) of the wiper arm (12), on which hinge bolt a wiper blade (16) which can be pivoted about the hinge axis (38) and can be placed on the pane (28) is mounted, and the wiper device has means for securing the wiper blade on the hinge bolt, which means have stop surfaces which lie at a distance from each other transversely to the hinge axis, point away from each other, are arranged on the wiper blade and grip in a well-fitting manner between mutually directed securing surfaces of the wiper arm, the stop surfaces (78, 86) of the wiper blade being arranged on the two longitudinal sides of a coupling part (32) which is present on the said wiper blade and has a bearing hole (34) for the hinge bolt (36), the one securing surface of the wiper arm being a cheek region (80) which faces the wiper blade, **characterized in that** the other securing surface (81) is formed on an attachment (44) of the hinge bolt (36), which attachment engages behind that stop surface (86) of the wiper blade (16) which faces away from the wiper arm.

2. Wiper device according to Claim 1, **characterized in that** the attachment (44) is connected fixedly to the hinge bolt (36), and **in that** the bearing hole (34) is provided on its circumferential surface (48) with a plug-through channel (50) matched to the attachment.

3. Wiper device according to either of Claims 1 and 2, **characterized in that** a plurality of attachments are arranged on the hinge bolt (36), and **in that** the bearing hole (34) has on its circumferential surface (48) corresponding to the number of attachments a plurality of plug-through channels (50) matched to the attachments.

4. Wiper device according to one of Claims 1 to 3, **characterized in that** stop surface of the wiper blade is formed on the base surface (86) of a depression (64) which extends in the circumferential direction and radially from the hole mouth and extends from that longitudinal side (62) of the coupling part (30) which faces away from the wiper arm (12) in the direction of the hinge axis.

5. Wiper device according to Claim 4, **characterized in that** the depression (64) is designed in the shape of an annular segment, as seen in the direction of the hinge axis (38), and **in that** the plug-through channel (50) opens into the depression.

6. Wiper device according to Claim 5, **characterized in that** the plug-through channel (50) opens into the depression (64) in the vicinity of the one annular-segment end surface (66).

7. Wiper device according to Claim 6, **characterized in that** the other annular-segment end surface (70) forms a pivoting delimitation for the wiper blade (16) which is mounted on the hinge bolt (36).

8. Wiper device according to either of Claims 6 and 7, **characterized in that** the segment angle (68) is greater than the swinging movement of the wiper blade (16) about the hinge axis (38) of the hinge bolt (36), which swinging movement takes place during the wiping operation.

9. Wiper device according to one of Claims 3 to 8, **characterized in that** the depth (72) of the depression (64) is at least the same size as the height (74) of the attachment (44) as measured in the direction of the hinge axis (38).

10. Wiper device according to one of Claims 3 to 9, **characterized in that** the attachment (44) is designed in the manner of a rectangular plate, the one longitudinal side (81) of which faces the hinge bolt (36) and, crossing the hinge axis, is preferably connected integrally to the hinge bolt, and the length (46) of which is greater than the diameter of the hinge bolt (36).

11. Wiper device according to one of Claims 1 to 10, **characterized in that** the coupling part (32) is held on the upper band surface (29), which faces away from the pane (28), of a spring-elastic supporting element (30) which is stretched out in the manner of a band, the said coupling part bearing at least over a subsection in a planar manner against the said band surface, and **in that** a rubber-elastic wiper strip (24) which can be placed against the pane is arranged parallel to the longitudinal axis on the lower band surface (31), which faces the pane (28), of the supporting element (30).

12. Wiper blade especially for panes of motor vehicles, with a driven wiper arm (12) which is guided on the motor vehicle, can be moved between reversal positions and on which a hinge bolt (36) is arranged, which hinge bolt is held on the said wiper arm and its hinge axis (38) extends transversely to the longitudinal axis of the wiper arm essentially in the direction of movement (22) of the wiper arm (12), with means for securing the wiper blade on the hinge bolt, with stop surfaces (78, 86) which lie at a distance from each other and point away from each other being arranged on the wiper blade transversely to the hinge axis and gripping in a well-fitting manner between mutually directed securing surfaces (80, 81) of the wiper arm, the stop surfaces (78, 86) of the wiper blade being arranged on the two longitudinal sides of a coupling part (32) which is present on the said wiper blade and has a bearing hole (34) for the hinge bolt (36), the one securing surface of the wiper arm being a cheek region (80) which faces the wiper blade, **characterized in that** the other securing surface (81) is formed on an attachment (44) of the hinge bolt (36), which attachment engages behind that stop surface (86) of the wiper blade (16) which faces away from the wiper arm, in particular for use in a wiper device according to one of Claims 1 to 11.

13. Wiper arm, especially for panes of motor vehicles, on which, in particular at its free end (14), a hinge bolt (36) is arranged, which hinge bolt is held on the said wiper arm and its hinge axis (38) extends transversely to the longitudinal axis of the wiper arm essentially in the direction of movement (double arrow 22) of the wiper arm (12), so that a wiper blade (16) which can be pivoted about the hinge axis (38) and can be placed on the pane (28) can be mounted on the hinge bolt, and the hinge bolt has means for securing the wiper blade on the hinge bolt, with stop surfaces (78, 86) which lie at a distance from each other, point away from each other and are arranged on the wiper blade transversely to the hinge axis being able to be accommodated in a well-fitting manner between mutually directed securing surfaces (80, 81) of the wiper arm (2), the one securing surface of the wiper arm being a cheek region (80) which faces the wiper blade, **characterized in that** the other securing surface (81) is formed on an attachment (44) of the hinge bolt (36), which attachment engages behind that stop surface (86) of the wiper blade (16) which faces away from the wiper arm, in particular for use in a wiper device according to one of Claims 1 to 11.

## Revendications

1. Dispositif d'essuyage, notamment de vitres de véhicules automobiles, comportant un bras d'essuie-glace (12) guidé par rapport au véhicule, entraîné entre deux positions d'inversion, et dont l'extrémité libre (14) comporte un goujon d'articulation (36) porté par ce bras, et dont l'axe géométrique (38) est dirigé transversalement à l'axe longitudinal du bras d'essuie-glace, principalement dans la direction de déplacement (double flèche 22) du bras d'essuie-glace (12), le goujon d'articulation portant un balai d'essuie-glace (16) pivotant autour de l'axe géométrique d'articulation (38) et s'appliquant contre la vitre (28), le dispositif d'essuyage comportant des moyens pour fixer le balai d'essuie-glace sur le goujon d'articulation, ces moyens ayant des surfaces de butées transversales à l'axe d'articulation, écartées l'une de l'autre, non tournées l'une vers l'autre et prévues sur le balai d'essuie-glace, ces surfaces de butées venant prendre de manière ajustée entre deux surfaces de fixation du bras d'essuie-glace tournées l'une vers l'autre,
les surfaces de butées (78, 86) du balai d'essuie-glace étant prévues sur les deux grands côtés d'une pièce d'accouplement (32) reliée au balai et ayant un perçage de palier (34) pour recevoir le goujon d'articulation (36),
l'une des surfaces de fixation du bras d'essuie-glace étant une zone de paroi (80) tournée vers le balai d'essuie-glace,
**caractérisé en ce que**
l'autre surface de fixation (81) est réalisée sur un prolongement (44) du goujon d'articulation (36) venant prendre derrière la surface de butée (86) du balai d'essuie-glace (16) non tournée vers le bras d'essuie-glace.

2. Dispositif d'essuie-glace selon la revendication 1,
**caractérisé en ce que**
le prolongement (44) est relié solidairement au goujon d'articulation (36) et
le perçage de palier (34) comporte, au niveau de sa surface-enveloppe (48), un canal traversant (50) correspondant au prolongement.

3. Dispositif d'essuie-glace selon l'une des revendications 1 ou 2,
**caractérisé en ce que**
le goujon d'articulation (36) comporte plusieurs prolongements et le perçage de palier (34) comporte dans sa surface-enveloppe (48), des canaux de passage (50) dont le nombre correspond à celui des prolongements.

4. Dispositif d'essuie-glace selon l'une des revendications 1 à 3,
**caractérisé en ce que**
la surface de butée du balai d'essuie-glace est réalisée sur la surface de base (86) d'une partie en retrait (64) s'étendant à partir de l'embouchure du perçage dans la direction périphérique et radialement, cette partie en retrait allant du grand côté (62) de la pièce d'accouplement (30) non tourné vers le bras d'essuie-glace (12) en direction de l'axe d'articulation.

5. Dispositif d'essuie-glace selon la revendication 4,
**caractérisé en ce que**
la partie en retrait (64) a une forme de segment annulaire lorsqu'on regarde dans la direction de l'axe géométrique d'articulation (38) et le canal traversant (50) débouche dans la partie en retrait.

6. Dispositif d'essuie-glace selon la revendication 5,
**caractérisé en ce que**
le canal traversant (50) débouche à proximité d'une surface de segment annulaire (66) dans la partie en retrait (64).

7. Dispositif d'essuie-glace selon la revendication 6,
**caractérisé en ce que**
l'autre surface d'extrémité de segment annulaire (70) forme une limitation de mouvement de pivotement pour le balai d'essuie-glace (16) monté sur le goujon d'articulation (36).

8. Dispositif d'essuie-glace selon l'une des revendications 6 ou 7,
**caractérisé en ce que**
l'angle (68) du segment est supérieur au mouvement oscillant du balai d'essuie-glace (16) autour de l'axe géométrique d'articulation (38) du goujon d'articulation (36) pendant le mouvement d'essuyage.

9. Dispositif d'essuie-glace selon l'une des revendications 3 à 8,
**caractérisé en ce que**
la profondeur (72) de la partie en retrait (64) est au moins égale à la hauteur (74) du prolongement (44) mesurée dans la direction de l'axe d'articulation (38).

10. Dispositif d'essuie-glace selon l'une des revendications 3 à 9,
**caractérisé en ce que**
le prolongement (44) est réalisé à la manière d'une plaque rectangulaire dont un grand côté (81) tourné vers le goujon d'articulation (36) en traversant l'axe géométrique d'articulation, est de préférence réalisé en une seule pièce avec le goujon d'articulation, et dont la longueur (46) est supérieure au diamètre du goujon d'articulation (36).

11. Dispositif d'essuie-glace selon l'une des revendications 1 à 10,
**caractérisé en ce que**
la pièce d'accouplement (32) est tenue sur la surface marginale (29) supérieure non tournée vers la vitre d'un élément de support (30) élastique comme un ressort, allongé longitudinalement en forme de ruban, et s'appuie à plat au moins sur un segment contre cette surface, et la zone de ruban (31) inférieure de l'élément de support (30), tournée vers la vitre (28), comporte une lame d'essuyage (24) ayant l'élasticité du caoutchouc, parallèle suivant l'axe longitudinal et s'appliquant contre la vitre.

12. Balai d'essuie-glace notamment pour les vitres d'un véhicule automobile, comportant un bras d'essuie-glace (12) guidé sur le véhicule, ce bras étant entraîné en mouvement entre deux positions d'inversion, et un goujon d'articulation (36) dont l'axe géométrique (38) est dirigé transversalement à l'axe longitudinal du bras d'essuie-glace, principalement dans la direction de mouvement (22) du bras d'essuie-glace (12), des moyens étant prévus pour fixer le balai d'essuie-glace sur le goujon d'articulation, et
transversalement à l'axe d'articulation et à distance de celui-ci, il y a des surfaces de butée (78, 86) écartées l'une de l'autre et non tournées l'une vers l'autre, qui viennent prendre de manière ajustée entre deux surfaces de fixation (80, 81) dirigées l'une vers l'autre,
les surfaces de butée (78, 86) du balai d'essuie-glace étant prévues sur les deux grands côtés d'une pièce d'accouplement (32) montée sur le balai et ayant un perçage de palier (34) pour le goujon d'articulation (36),
l'une des surfaces de fixation du bras d'essuie-glace étant une zone de paroi (80) tournée vers le balai d'essuie-glace,
**caractérisé en ce que**
l'autre surface de fixation (81) est réalisée sur un prolongement (44) du goujon d'articulation (36) qui vient prendre derrière la surface de butée (86) du balai d'essuie-glace (16), surface non tournée vers le bras d'essuie-glace, notamment pour l'application d'un dispositif d'essuie-glace selon l'une des revendications 1 à 11.

13. Bras d'essuie-glace notamment pour les vitres de véhicules automobiles et dont l'extrémité libre (14) porte un goujon d'articulation (36) et dont l'axe géométrique (38) s'étend transversalement à l'axe longitudinal du bras d'essuie-glace, principalement dans la direction de déplacement (double flèche 22) du bras d'essuie-glace (12) de sorte que le goujon d'articulation reçoit un balai d'essuie-glace (16) pivotant autour de l'axe géométrique (38) et s'appliquant contre la vitre (28), le goujon d'articulation comportant des moyens pour y fixer le balai d'essuie-glace, avec transversalement à l'axe géométrique d'articulation, à distance de celui-ci, des surfaces de butée (78, 86) prévues sur le balai d'essuie-glace et non tournées l'une vers l'autre, qui sont logées de manière ajustée entre deux surfaces de fixation (80, 81) tournées l'une vers l'autre du bras d'essuie-glace, l'une des surfaces de fixation du bras d'essuie-glace étant une zone de paroi (80) tournée vers le balai d'essuie-glace,
**caractérisé en ce que**
l'autre surface de fixation (81) est réalisée sur un prolongement (44) du goujon d'articulation (36) qui vient prendre derrière la surface de butée (86) du balai d'essuie-glace (16) non tournée vers le bras d'essuie-glace, notamment pour l'application d'un dispositif d'essuie-glace selon l'une des revendications 1 à 11.
